(19) Europäisches Patentamt
European Patent Office
Office européen des brevets

(11) **EP 3 787 085 A1**

(12) **EUROPEAN PATENT APPLICATION**
published in accordance with Art. 153(4) EPC

(43) Date of publication:
**03.03.2021 Bulletin 2021/09**

(21) Application number: **19778209.7**

(22) Date of filing: **29.03.2019**

(51) Int Cl.:
*H01M 8/1226* (2016.01)     *B21B 1/22* (2006.01)
*H01M 8/00* (2016.01)     *H01M 8/0258* (2016.01)
*H01M 8/12* (2016.01)     *H01M 8/1286* (2016.01)
*H01M 8/2484* (2016.01)

(86) International application number:
**PCT/JP2019/014379**

(87) International publication number:
**WO 2019/189914 (03.10.2019 Gazette 2019/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2018 JP 2018070343**

(71) Applicant: **Osaka Gas Co., Ltd.**
**Osaka-shi, Osaka 541-0046 (JP)**

(72) Inventors:
• **ECHIGO Mitsuaki**
**Osaka-shi, Osaka 541-0046 (JP)**
• **OHNISHI Hisao**
**Osaka-shi, Osaka 541-0046 (JP)**

(74) Representative: **Lemcke, Brommer & Partner**
**Patentanwälte Partnerschaft mbB**
**Siegfried-Kühn-Straße 4**
**76135 Karlsruhe (DE)**

(54) **METHOD FOR PRODUCING METAL PLATE, METAL PLATE, ELECTROCHEMICAL ELEMENT, ELECTROCHEMICAL MODULE, ELECTROCHEMICAL APPARATUS, ENERGY SYSTEM, SOLID OXIDE FUEL CELL, AND SOLID OXIDE ELECTROLYSIS CELL**

(57)     Provided are a metal plate configured such that sufficient strength and performance are ensured and the workability and cost of mass production are improved, and a metal-supported electrochemical element and the like including the metal plate. A method for manufacturing a metal plate 20 includes a rolling step for rolling a metal material 10 provided with a penetration space 10c passing through the metal material 10 in a thickness direction to reduce the thickness of the metal material 10 and reduce the area of a surface opening 10d formed in the surface of the metal material 10 by the penetration space 10c, thereby producing a plate-like metal plate 20.

Fig.7

**Description**

Technical Field

The present invention relates to a metal plate, a metal-supported electrochemical element and the like including the metal plate, and a method for manufacturing the metal plate.

Background Art

A metal support for a conventional metal-supported SOFC is formed by providing many holes in a metal plate. However, an optimum hole shape that is determined in view of workability and cost of mass production and ensures sufficient SOFC performance has not been found yet.

Prior Art Documents

Patent Document

Patent Document 1: JP 2008-525967A

Disclosure of the Invention

Problem to be Solved by the Invention

Patent Document 1 discloses a structure of a metal support configured in view of workability during the formation of a cell. The cell disclosed in Patent Document 1 is formed by providing an electrode layer, an electrolyte layer, and a counter electrode layer one on top of another on a metal foil that has a thickness of approximately 15 pm and is provided with many holes. Due to low strength, such a thin metal foil is difficult to handle during the cell production and is not suitable for mass production.

The present invention was made in view of the aforementioned problem, and an object thereof is to provide a metal plate configured such that sufficient strength and performance are ensured and the workability and cost of mass production are improved, and an electrochemical element and the like including the metal plate.

Means for Solving Problem

Configuration 1

In order to achieve the above-mentioned object, in a characteristic configuration of a method for manufacturing a metal plate, the method includes a rolling step for rolling a metal material provided with a penetration space passing through the metal material in a thickness direction to reduce a thickness of the metal material and reduce an area of a surface opening formed in a surface of the metal material by the penetration space, thereby producing a plate-like metal plate.

With the characteristic configuration described above, a metal plate is manufactured as a plate-like metal plate obtained by rolling a metal material provided with a penetration space passing through the metal material in the thickness direction to reduce the thickness of the metal material and reduce the area of the surface opening formed in the surface of the metal material by the penetration space. Therefore, a metal plate in which the surface opening formed by the penetration space after rolling (metal plate penetration space) has an area smaller than the area of the surface opening formed by the penetration space of the metal material can be relatively easily formed. Accordingly, a metal plate that is provided with a penetration space (metal plate penetration space) forming a surface opening with a small area and is configured such that the workability and cost of mass production are improved and the strength is ensured can be obtained.

Configuration 2

In another characteristic configuration of the method for manufacturing a metal plate according to the present invention, the aperture ratio of a surface opening formed in a surface of the metal plate by a metal plate penetration space is set to 50% or less by performing the rolling step.

With the characteristic configuration described above, a metal plate in which the aperture ratio of the metal plate penetration space in the surface of the metal plate is 50% or less is manufactured by rolling a metal material provided with a penetration space passing through the metal material in the thickness direction to reduce the thickness of the metal material and reduce the area of the surface opening formed by the penetration space. Therefore, a metal plate in which the area of the surface opening formed by the metal plate penetration space is small can be relatively easily formed. Accordingly, a metal plate that is provided with a metal plate penetration space forming a surface opening with a small area and is configured such that sufficient strength and performance, such as fluid permeability, are ensured and the workability and cost of mass production are improved can be obtained. It should be noted that the aperture ratio of the metal plate penetration space in the surface of the metal plate is more preferably 40% or less, and even more preferably 7% or less. The reason for this is that employing such a configuration makes it possible to increase the strength of the metal plate while ensuring performance, such as permeability to a fluid flowing in the metal plate penetration space. It should be noted that the aperture ratio of the metal plate penetration space in the surface of the metal plate is preferably 0.1% or more, more preferably 0.15% or more, and even more preferably 0.7% or more. The reason for this is that employing such a configuration makes it possible to increase performance, such as fluid permeability, while sufficiently ensuring the strength of the metal plate.

Configuration 3

In another characteristic configuration of the method for manufacturing a metal plate according to the present invention, one of a metal mesh, an expanded metal, and a punched metal is used as the metal material.

With the characteristic configuration described above, using one of a metal mesh, an expanded metal, and a punched metal as the metal material makes it possible to relatively easily form a metal plate in which the area of the surface opening formed in the surface of the metal plate by the metal plate penetration space is reduced by performing the rolling step. Therefore, a metal plate can be obtained that is provided with a metal plate penetration space forming a surface opening with a small area and is configured such that the workability and cost of mass production are improved.

It should be noted that a metal mesh is a sheet-like member (metal material) formed by weaving thin metal wires, and a space between the weaved thin wires serves as the penetration space (through hole) that passes through the metal mesh in the thickness direction. An expanded metal is a sheet-like member (metal material) obtained by forming a rift in a metal plate and widening the rift into a rhombic shape, a hexagonal shape, or the like, and the portion formed into a rhombic shape, a hexagonal shape, or the like by widening the rift serves as the penetration space (through hole) that passes through the expanded metal in the thickness direction. A punched metal is a metal plate (metal material) provided with a relatively large hole through punching (pressing).

Configuration 4

In order to achieve the above-mentioned object, in a characteristic configuration of a metal plate, the metal plate has a plate shape as a whole and is provided with a metal plate penetration space passing through the metal plate in a thickness direction, wherein the aperture ratio of a surface opening formed in a surface of the metal plate by the metal plate penetration space is 50% or less.

With the characteristic configuration described above, the aperture ratio of the surface opening formed in the surface of the metal plate by the metal plate penetration space is 50% or less, and therefore, a metal plate that is provided with a metal plate penetration space forming a surface opening with a small area and is configured such that sufficient strength and performance, such as fluid permeability, are ensured and the workability and cost of mass production are improved can be provided. The aperture ratio of the metal plate penetration space in the surface of the metal plate is more preferably 40% or less, and even more preferably 7.0% or less. The reason for this is that employing such a configuration makes it possible to increase the strength of the metal plate while ensuring performance, such as permeability to a fluid flowing in the metal plate penetration space. It should be noted that the aperture ratio of the metal plate penetration space in the surface of the metal plate is preferably 0.1% or more, more preferably 0.15% or more, and even more preferably 0.7% or more. The reason for this is that employing such a configuration makes it possible to increase performance, such as fluid permeability, while sufficiently ensuring the strength of the metal plate.

Configuration 5

In order to achieve the above-mentioned object, in another characteristic configuration of the metal plate, the metal plate has a thickness of 0.1 mm or more and 1.0 mm or less.

The characteristic configuration described above is favorable because the strength of the entire metal plate can be sufficiently maintained due to the metal plate having a thickness of 0.1 mm or more and 1.0 mm or less, thus making it possible to improve workability in mass production and reduce the cost. It should be noted that the thickness of the metal plate is preferably 0.1 mm or more, more preferably 0.15 mm or more, and even more preferably 0.2 mm or more. The reason for this is that employing such a configuration makes it possible to further facilitate handling in mass production while maintaining the strength of the metal plate. Also, the thickness of the metal plate is preferably 1.0 mm or less, more preferably 0.75 mm or less, and even more preferably 0.5 mm or less. The reason for this is that employing such a configuration makes it possible to further reduce the cost of the metal plate while maintaining the strength of the metal plate.

Configuration 6

In another characteristic configuration of the metal plate according to the present invention, the metal plate is made of a Fe-Cr based alloy.

With the characteristic configuration described above, the oxidation resistance and high-temperature strength of the metal plate can be improved. Moreover, this characteristic configuration is favorable because the thermal expansion coefficient of the metal plate can be set to be close to those of objects to be supported (the materials of the constitutional elements, such as an electrode layer and an electrolyte layer, of an electrochemical element and the like), which are formed on the metal plate, for example, thus making it possible to realize a configuration having excellent heat-cycle durability.

Configuration 7

In another characteristic configuration of the metal plate according to the present invention, at least a portion of a surface of the metal plate is covered by a metal oxide film.

With the characteristic configuration described above, the metal oxide coating can suppress diffusion of the components such as Cr from the metal plate. For example, in the case of an electrochemical element obtained by forming an electrode layer and the like on the metal plate, a decrease in performance of the electrode layer and the like can be suppressed, and the performance and durability of the electrochemical element can be improved.

Configuration 8

An electrochemical element in which at least an electrode layer, an electrolyte layer, and a counter electrode layer are provided on/over the above-described metal plate is favorable because sufficient performance is ensured, and the workability and cost of mass production are improved. Furthermore, this electrochemical element is favorable because the constitutional elements of the electrochemical element such as an electrode layer and an electrolyte layer are formed on/over the metal plate having excellent strength, and therefore, the constitutional elements of the electrochemical element such as an electrode layer and an electrolyte layer can be formed as thin layers or thin films, thus making it possible to reduce the material cost of the electrochemical element.

Configuration 9

In a characteristic configuration of an electrochemical module according to the present invention, a plurality of the above-described electrochemical elements are arranged in an assembled state.

With the characteristic configuration described above, the plurality of the above-described electrochemical elements are arranged in an assembled state, thus making it possible to obtain an electrochemical module that is compact, has high performance, and has excellent strength and reliability, while also suppressing the material cost and processing cost.

Configuration 10

A characteristic configuration of an electrochemical device according to the present invention includes at least the above-described electrochemical element or the above-described electrochemical module and a fuel converter, and includes a fuel supply unit that allows gas containing a reducing component to flow between the electrochemical element or the electrochemical module and the fuel converter.

With the characteristic configuration described above, the electrochemical device includes the electrochemical element or electrochemical module and the fuel converter and includes the fuel supply unit that allows the gas containing a reducing component to flow between the electrochemical element or electrochemical module and the fuel converter. Therefore, in the case of operating the electrochemical element or electrochemical module as a fuel cell, employing a configuration in which hydrogen is generated using a fuel converter such as a reformer from natural gas or the like supplied using an existing raw fuel supply infrastructure such as city gas makes it possible to realize an electrochemical device including an electrochemical element or electrochemical module that has excellent durability, reliability, and performance. Also, it is easier to construct a system that recycles unused fuel gas flowing from the electrochemical module, thus making it possible to realize a highly efficient electrochemical device.

In the case of operating the electrochemical element or electrochemical module as an electrolytic (electrolysis) cell, gas containing water vapor and carbon dioxide flows to an electrode layer, and a voltage is applied between the electrode layer and a counter electrode layer. As a result, in the electrode layer, electrons $e^-$ react with water molecules $H_2O$ and carbon dioxide molecules $CO_2$ to produce hydrogen molecules $H_2$, and carbon monoxide $CO$ and oxygen ions $O^{2-}$. The oxygen ions $O^{2-}$ move to the counter electrode layer through the electrolyte layer. In the counter electrode layer, the oxygen ions $O^{2-}$ release electrons and oxygen molecules $O_2$ are produced. Through the reactions above, water molecules $H_2O$ are electrolyzed into hydrogen $H_2$ and oxygen $O_2$, and in the case where gas containing carbon dioxide molecules $CO_2$ flows, carbon dioxide molecules $CO_2$ are electrolyzed into carbon monoxide $CO$ and oxygen $O_2$.

In the case where gas containing water vapor and carbon dioxide molecules $CO_2$ flows, a fuel converter that synthesizes various compounds such as hydrocarbons from hydrogen, carbon monoxide, and the like generated through the above-mentioned electrolysis in the electrochemical element or electrochemical module can be provided. With the fuel supply unit, hydrocarbon and the like produced by this fuel converter can flow to the electrochemical element or electrochemical module or can be extracted from the system and the device and separately used as fuel or a chemical raw material.

Configuration 11

A characteristic configuration of an electrochemical device according to the present invention includes at least the above-described electrochemical element or the above-described electrochemical module and a power converter that extracts power from the electrochemical element or the electrochemical module or supplies power to the electrochemical element or the electrochemical module.

With the characteristic configuration described above, the power converter extracts power generated by the electrochemical element or electrochemical module or supplies power to the electrochemical element or electrochemical module. Thus, as mentioned above, the electrochemical element or electrochemical module serves as a fuel cell or an electrolytic cell. Accordingly, with the above-mentioned configuration, it is possible to provide an electrochemical element and the like that can improve the efficiency of converting chemical energy such as fuel into electric energy or can improve the efficiency of converting electric energy into chemical energy such as fuel.

It should be noted that it is preferable to use an inverter as the power converter, for example, because the inverter can be used to boost electrical output obtained from the electrochemical element or electrochemical module that has excellent durability, reliability, and performance, and to convert a direct current into an alternating current, thus making it easy to use the electrical output obtained from the electrochemical element or electrochemical module.

Configuration 12

A characteristic configuration of an energy system according to the present invention includes the above-described electrochemical device, and waste heat utilization system that reuses heat discharged from the electrochemical device.

The characteristic configuration described above includes the electrochemical device and the waste heat utilization system that reuses heat discharged from the electrochemical device, thus making it possible to realize an energy system that has excellent durability, reliability, and performance as well as excellent energy efficiency. It should be noted that it is also possible to realize a hybrid system that has excellent energy efficiency through combination of a power generation system that generates power with use of combustion heat from unused fuel gas discharged from the electrochemical device.

Configuration 13

A characteristic configuration of a solid oxide fuel cell according to the present invention includes the above-described electrochemical element, wherein a power generation reaction is caused in the electrochemical element.

With the characteristic configuration described above, the solid oxide fuel cell including the electrochemical element that has excellent durability, reliability, and performance can cause a power generation reaction, and thus a solid oxide fuel cell having high durability and high performance can be obtained. It should be noted that a solid oxide fuel cell that can be operated in a temperature range of 650°C or higher during the rated operation is more preferable because a fuel cell system that uses hydrocarbon-based gas such as city gas as raw fuel can be constructed such that waste heat discharged from a fuel cell can be used in place of heat required to convert raw fuel to hydrogen, and power generation efficiency of the fuel cell system can thus be improved. A solid oxide fuel cell that is operated in a temperature range of 900°C or lower during the rated operation is more preferable because the effect of suppressing volatilization of Cr from a metal-supported electrochemical element can be improved, and a solid oxide fuel cell that is operated in a temperature range of 850°C or lower during the rated operation is even more preferable because the effect of suppressing volatilization of Cr can be further improved.

Configuration 14

A characteristic configuration of a solid oxide electrolytic cell according to the present invention includes the above-described electrochemical element, wherein an electrolytic reaction is caused in the electrochemical element.
With the characteristic configuration described above, the solid oxide electrolytic cell including the electrochemical element that has excellent durability, reliability, and performance can produce gas through an electrolytic reaction, and thus a solid oxide electrolytic cell having high durability and high performance can be obtained.

Brief Description of the Drawings

FIG. 1 is a schematic diagram showing a configuration of an electrochemical element.
FIG. 2 is a schematic diagram showing configurations of electrochemical elements and an electrochemical module.
FIG. 3 is a schematic diagram showing configurations of an electrochemical device and an energy system.
FIG. 4 is a schematic diagram showing a configuration of an electrochemical module.
FIG. 5 shows a plan view and a cross-sectional view showing a structure of a metal support.
FIG. 6 shows a plan view and a cross-sectional view showing a structure of a punched metal, which is a metal material.
FIG. 7 shows a plan view and a cross-sectional view showing a structure of a metal support obtained by rolling a punched metal.
FIG. 8 is a plan view showing a structure of a metal mesh, which is a metal material.
FIG. 9 is a plan view showing a structure of a metal support obtained by rolling a metal mesh.
FIG. 10 is a schematic diagram showing configurations of another electrochemical device and another energy system.

Modes Of Embodying The Invention

First Embodiment

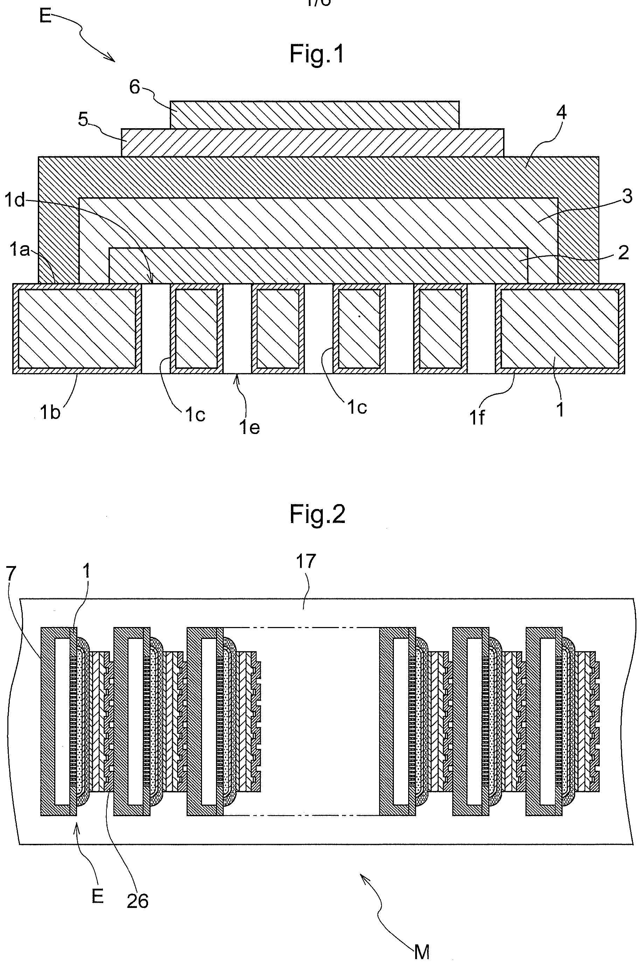

Hereinafter, an electrochemical element E and a solid oxide fuel cell (SOFC) according to this embodiment will be described with reference to FIG. 1. The electrochemical element E is used as a constitutional element of a solid oxide fuel cell that receives a supply of air and fuel gas containing hydrogen and generates power, for example. It should be noted that, when the positional relationship between layers and the like are described in the description below, a counter electrode layer 6 side may be referred to as "upper portion" or "upper side", and an electrode layer 2 side may be referred to as "lower portion" or 'lower side", with respect to an electrolyte layer 4, for example. In addition, in a metal support 1, a face on which the electrode layer 2 is formed is referred to as "front face 1a", and a face on an opposite side is referred to as "back face 1b".

Electrochemical Element

As shown in FIG. 1, the electrochemical element E includes a metal support 1 (an example of a metal plate), an electrode layer 2 formed on the metal support 1, an intermediate layer 3 formed on the electrode layer 2, and an electrolyte layer 4 formed on the intermediate layer 3. The electrochemical element E further includes a reaction preventing layer 5 formed on the electrolyte layer 4, and a counter electrode layer 6 formed on the reaction preventing layer 5. Specifically, the counter electrode layer 6 is formed above the electrolyte layer 4, and the reaction preventing layer 5 is formed between the electrolyte layer 4 and the counter electrode layer 6. The electrode layer 2 is porous, and the electrolyte layer 4 is dense.

Metal Support

The metal support 1 supports the electrode layer 2, the intermediate layer 3, the electrolyte layer 4, and the like, and maintains the strength of the electrochemical element E. That is, the metal support 1 serves as a support that supports the electrochemical element E.
A material that has excellent electron conductivity, thermal resistance, oxidation resistance, and corrosion resistance is used as the material of the metal support 1. Examples thereof include ferrite-based stainless steel, austenite-based stainless steel, and a nickel-based alloy. In particular, an alloy containing chromium is favorably used. In this embodiment, the metal support 1 is made of a Fe-Cr based alloy that contains Cr in an amount of 18 mass% or more and 25 mass% or less, but a Fe-Cr based alloy that contains Mn in an amount of 0.05 mass% or more, a Fe-Cr based alloy that contains Ti in an amount of 0.15 mass% or more and 1.0 mass% or less, a Fe-Cr based alloy that contains Zr in an amount of 0.15 mass% or more and 1.0 mass% or less, a Fe-Cr based alloy that contains Ti and Zr, a total content of Ti and Zr being 0.15 mass% or more and 1.0 mass% or less, and a Fe-Cr based alloy that contains Cu in an amount of 0.10 mass% or more and 1.0 mass% or less are particularly favorable.

The metal support 1 has a plate shape as a whole. The metal support 1 is provided with a plurality of metal plate penetration spaces 1c (holes) that pass through the metal support 1 from the front face 1a, which is a face on which the electrode layer 2 is provided, to the back face 1b. The metal plate penetration spaces 1c allow gas to permeate from the back face 1b of the metal support 1 to the front face 1a thereof. It should be noted that a configuration is also possible in which the plate-like metal support 1 is deformed into, for example, a box shape, a cylindrical shape, or the like through bending or the like and used.

A metal oxide layer 1f serving as a diffusion suppressing layer is provided on the surface of the metal support 1. That is, the diffusion suppressing layer is formed between the metal support 1 and the electrode layer 2, which will be described later. The metal oxide layer 1f is provided not only on the face of the metal support 1 exposed to the outside but also on the face (interface) that is in contact with the electrode layer 2. The metal oxide layer 1f can also be provided on the inner faces of the metal plate penetration spaces 1c. Element interdiffusion that occurs between the metal support 1 and the electrode layer 2 can be suppressed due to this metal oxide layer 1f. For example, when ferrite-based stainless steel containing chromium is used in the metal support 1, the metal oxide layer 1f is mainly made of a chromium oxide. The metal oxide layer 1f containing the chromium oxide as the main component suppresses diffusion of chromium atoms and the like of the metal support 1 to the electrode layer 2 and the electrolyte layer 4. The metal oxide layer 1f need only have such a thickness that allows both high diffusion preventing performance and low electric resistance to be achieved.

The metal oxide layer 1f can be formed using various techniques, but it is favorable to use a technique of oxidizing the surface of the metal support 1 to obtain a metal oxide. Also, the metal oxide layer 1f may be formed on the surface of the metal support 1 by using a spray coating technique (a technique such as thermal spraying technique, an aerosol deposition technique, an aerosol gas deposition technique, a powder jet deposition technique, a particle jet deposition technique, or a cold spraying technique), a PVD technique such as a sputtering technique or PLD technique, or a CVD technique, or may be formed by plating and oxidation treatment. Furthermore, the metal oxide layer 1f may also contain a spinel phase that has high electrical conductivity, or the like.

When a ferrite-based stainless steel material is used to form the metal support 1, its thermal expansion coefficient is close to that of YSZ (yttria-stabilized zirconia), GDC (gadolinium-doped ceria; also called CGO), or the like, which is used as the material of the electrode layer 2 and the electrolyte layer 4. Accordingly, even if low and high temperature cycling is repeated, the electrochemical element E is not likely to be damaged. Therefore, this is preferable due to being able to realize an electrochemical element E that has excellent long-term durability.

Structures of Metal Support and Metal Plate Penetration Spaces

The metal support 1 can also be constituted by a single metal plate.

The metal support 1 can also be formed by stacking a plurality of metal plates. The metal support 1 can also be formed by stacking a plurality of metal plates that have the same thickness or substantially the same thickness. The metal support 1 can also be formed by stacking a plurality of metal plates that have different thicknesses. The metal support 1 can also be formed by stacking a metal plate and a metal mesh plate. In the case where the metal support 1 is formed by stacking a plurality of metal plates, a configuration is also possible in which at least one of the plurality of metal plates is a metal plate (rolled plate 20) that has been rolled in a rolling step, which will be described later, and a configuration may also be employed in which all of the plurality of metal plates are the rolled plates 20.

Hereinafter, examples of the structures of the metal support 1 and the metal plate penetration spaces 1c will be described with reference to the drawings. It should be noted that the metal oxide layer 1f is not shown.

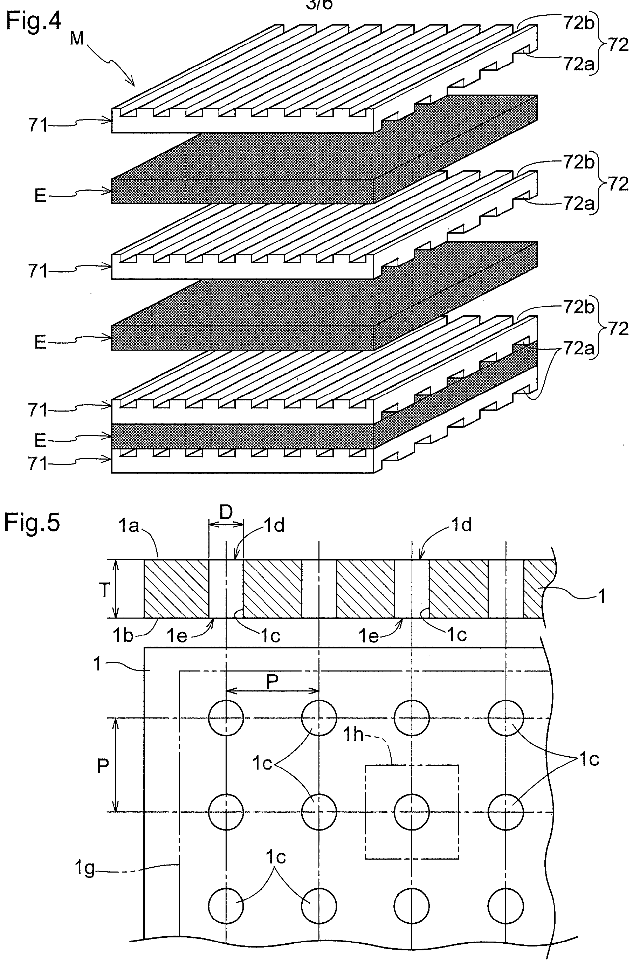

An example in which the metal support 1 is constituted by a single metal plate will be described with reference to FIG. 5.

It should be noted that, as described later, in this embodiment, a plate-like rolled plate 20 (metal support 1) provided with holes 20c serving as the metal plate penetration spaces 1c is obtained by rolling a plate-like metal material 10 (an example of a metal material) provided with holes 10c (examples of the penetration spaces) in the rolling step to reduce the thickness of the metal material 10 and reduce the areas of front-side openings 10d (examples of the surface openings) formed in the surface of the metal material 10 by the holes 10c. Accordingly, in the description of FIG. 5, the rolled plate 20 obtained by rolling the metal material 10 is used as the metal support 1.

As shown in FIG. 5, the metal support 1 is a plate-like member having a thickness T. That is, the metal support 1 has a plate shape as a whole. The metal support 1 is provided with the plurality of metal plate penetration spaces 1c that pass through the metal support 1 from the front face 1a to the back face 1b. The metal plate penetration spaces 1c are holes with a circular cross section. The cross section of each of the metal plate penetration spaces 1c may also have a rectangular shape, a triangular shape, a polygonal shape, or the like other than a circular shape or a substantially circular shape. Various shapes can be selected as long as the metal plate penetration spaces 1c can be formed and the functions of the metal support 1 can be maintained. The central axes of these holes are orthogonal to the metal support 1. It should be noted that the central axes of the holes (metal plate penetration spaces 1c) may be inclined to the metal support 1.

The openings formed in the front face 1a by the metal plate penetration spaces 1c are referred to as "front-side openings 1d". The openings formed in the back face 1b by the metal plate penetration spaces 1c are referred to as "back-side openings 1e". Since the metal plate penetration spaces 1c are holes having a circular cross section, all of the front-side openings 1d and the back-side openings 1e have a circular shape. The front-side openings 1d and the back-side openings 1e may have the same size. The back-side openings 1e may be larger than the front-side openings 1d. The diameter of each of the front-side openings 1d is taken as a "diameter D".

As shown in FIG. 5, in the metal support 1, the plurality of holes (metal plate penetration spaces 1c) are formed at positions corresponding to the lattice points of an orthogonal lattice at a pitch P (interval). The arrangement pattern of the plurality of holes (metal plate penetration spaces 1c) may be an orthorhombic lattice or an equilateral-triangular lattice other than the orthogonal lattice. The plurality of holes can be arranged at intersection points of the diagonal lines in addition to the lattice points. Various arrangement patterns can be selected as long as the metal plate penetration spaces can be formed and the functions of the metal support can be maintained.

A region of the front face 1a of the metal support 1 provided with the metal plate penetration spaces 1c is referred to as the "hole region 1g". The hole region 1g is provided in the entire metal support 1 excluding the vicinity of the outer periphery. The metal support 1 may be provided with a single hole region 1g or a plurality of hole regions 1g.

The metal support 1 is required to have a strength that is sufficient to serve as a support for forming the electrochemical element E. The thickness T of the metal support 1 is preferably 0.1 mm or more, more preferably 0.15 mm or more, and even more preferably 0.2 mm or more. The thickness T of the metal support 1 is preferably 1.0 mm or less, more preferably 0.75 mm or less, and even more preferably 0.5 mm or less.

The diameter D of each of the front-side openings 1d is preferably 10 pm or more, more preferably 15 pm or more, and even more preferably 20 pm or more. The diameter D of each of the front-side openings 1d is preferably 60 pm or less, more preferably 50 pm or less, and even more preferably 40 pm or less.

The arrangement pitch P of the metal plate penetration spaces 1c (holes) is preferably 0.05 mm or more, more preferably 0.1 mm or more, and even more preferably 0.15 mm or more. The arrangement pitch P of the metal plate penetration spaces 1c (holes) is preferably 0.3 mm or less, more preferably 0.25 mm or less, and even more preferably 0.2 mm or less.

An area S of each of the front-side openings 1d formed by the metal plate penetration spaces 1c is preferably $7.0 \times 10^{-5}$ mm$^2$ or more and $3.0 \times 10^{-3}$ mm$^2$ or less.

A ratio of the front-side openings 1d to the hole region 1g is defined as an aperture ratio A. The aperture ratio A is preferably 50% or less, more preferably 40% or less, and even more preferably 7.0% or less. Also, the aperture ratio A is preferably 0.1% or more, more preferably 0.15% or more, and even more preferably 0.7% or more. The aperture ratio A is calculated by dividing the sum of the areas S of the front-side openings 1d in the hole region 1g by the area of the hole region 1g.

It should be noted that the aperture ratio A can also be calculated focusing on regions that are periodically located in the hole region 1g. For example, when focusing on a unit region 1h shown in FIG. 5, a value obtained by dividing the area S by the area of the unit region 1h (the square of the pitch P) is substantially equal to the aperture ratio A of the entire hole region 1g. That is, in the case of an orthogonal lattice shown in FIG. 5, the aperture ratio A can be calculated using Formula 1 below. In the case where the front-side opening 1d has a circular shape with a diameter D, the relationship shown in Formula 2 below is obtained.

$$\text{Aperture ratio } A = \frac{Area\ S}{(Pitch\ P)^2} \ \dots \text{(Formula 1)}$$

$$\text{Aperture ratio } A = \frac{Area\ S}{(Pitch\ P)^2} = \frac{\pi \times (Diameter\ D/2)^2}{(Pitch\ P)^2} \ \dots \text{(Formula 2)}$$

It should be noted that, if the holes 20c, which are obtained after performing rolling, do not have a circular shape, the diameter (inner diameter) of each of the holes 20c can be calculated as the diameter of a circle having the same area as the cross-sectional area of each hole. Moreover, the aperture ratio A can also be calculated by calculating the opening area per unit area through image processing.

Method for Manufacturing Metal Support 1

Hereinafter, a method for manufacturing the metal support 1 according to this embodiment will be described.

(rolling step)

In the rolling step, the plate-like rolled plate 20 (metal support 1) provided with the holes 20c serving as the metal plate penetration spaces 1c is obtained by rolling the plate-like metal material 10 provided with the holes 10c to reduce the thickness of the metal material 10 and reduce the areas of the front-side openings 10d formed in the surface of the metal material 10 by the holes 10c.

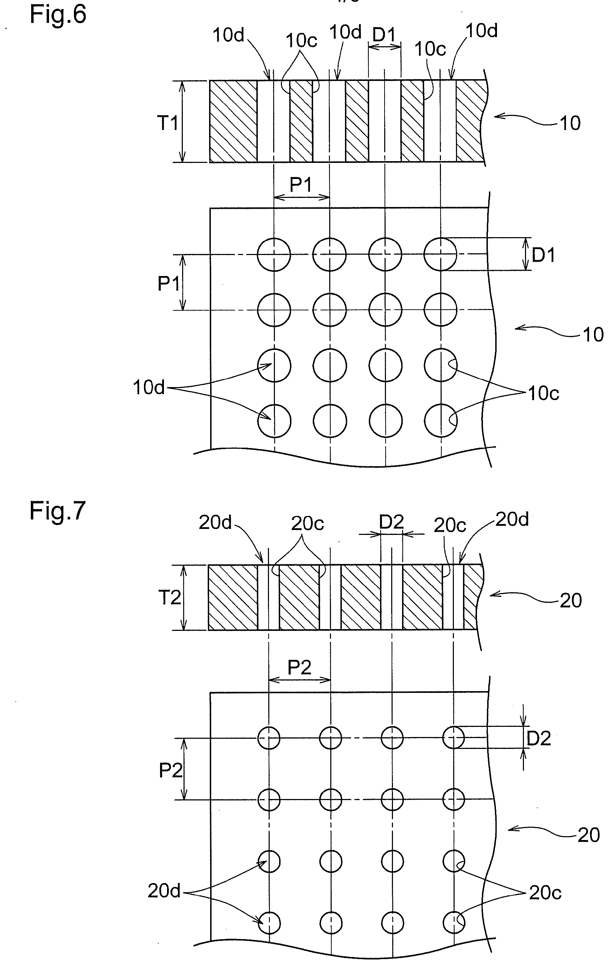

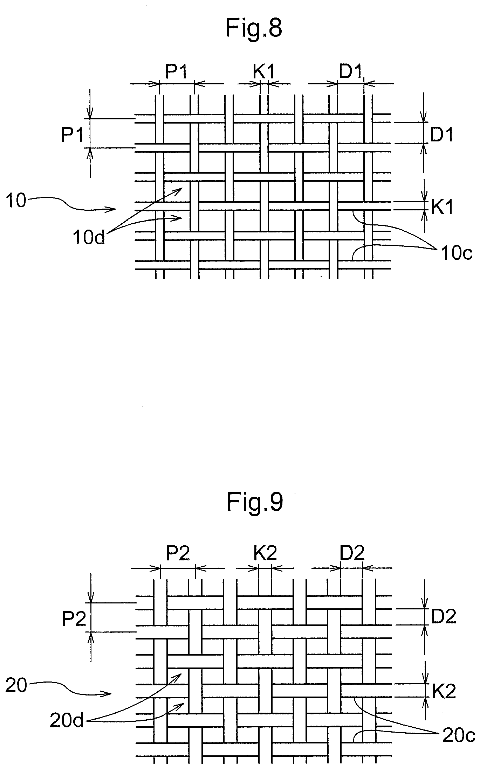

A plate-like metal material provided with the holes 10c passing through the metal material in the thickness direction and can be subjected to rolling can be favorably used as the metal material 10, and examples thereof include a punched metal as shown in FIG. 6, a metal mesh as shown in FIG. 8, and an expanded metal. A punched metal is a metal plate provided with a relatively large hole through punching (pressing). A metal mesh is a sheet-like member formed by weaving thin metal wires, and a space between the weaved thin wires serves as the hole 10c (penetration space) that passes through the metal mesh in the thickness direction. An expanded metal is a sheet-like (mesh-like) metal plate obtained by spreading out a metal plate while forming a rift in the metal plate, and shaping the rift into a rhombic shape, a hexagonal shape, or the like.

FIG. 6 shows a punched metal, which is an example of the metal material 10. In this example, the circular holes 10c with a diameter D1 are formed at positions corresponding to the lattice points of an orthogonal lattice at a pitch P1. It should be noted that this metal material 10 has a thickness T1.

FIG. 7 shows the rolled plate 20 obtained by rolling the metal material 10. After the punched metal has been rolled, its thickness T1 is reduced, and the areas of the front-side openings 10d formed by the hole 10c are also reduced. The rolled plate 20 has a thickness T2, each of the holes 20c has a diameter D2, and the pitch is P2. It should be noted that the thickness T1 is larger than the thickness T2, and the areas of the front-side openings 10d formed by the holes 10c are larger than the areas of front-side openings 20d formed by the holes 20c.

FIG. 8 shows a metal mesh, which is an example of the metal material 10. In the metal mesh of this example, metal wires having a thickness of K1 are arranged so as to be orthogonal to each other at a pitch P1. Holes 10c are formed between the metal wires. In the example shown in FIG. 8, each of the holes 10c has a square shape with a side length D1. It should be noted that this metal material 10 has a thickness T1.

FIG. 9 shows the rolled plate 20 obtained by rolling the metal material 10. After the metal mesh has been rolled, its thickness T1 is reduced, and the areas of the front-side openings 10d formed by the holes 10c are also reduced due to the metal wires being flattened. The pitch of the metal wires may or may not change due to rolling. The rolled plate 20 has a thickness T2, each of the holes 20c has a side length D2, and the pitch of the metal wires is P2. It should be noted that the thickness T1 is larger than the thickness T2, and the areas of the front-side openings 10d formed by the holes 10c are larger than the areas of front-side openings 20d formed by the holes 20c. It should be noted that the aperture ratio A of the rolled plate 20 may be calculated by using, as the diameter D2, the diameter of a circle having the same area as the cross-sectional area of each hole 20c. Moreover, the aperture ratio A can also be calculated by calculating the opening area per unit area through image processing.

The following describes examples in which various metal materials 10 were rolled through roll-based rolling in the above-described rolling step.

Table 1 shows the results of the rolling step. It should be noted that the roll-based rolling was performed using rolls having a working roll diameter of 60 mm to 200 mm while pressing force was selected as appropriate depending on the material characteristics of the metal materials 10.

Working Example 1

A plate-like rolled plate (metal support) was produced by rolling a twilled dutch weave metal mesh that was made of SUS, had a warp diameter of 0.27 mm and a weft diameter of 0.21 mm, and had a 24×250 mesh (warp × weft), through roll-based rolling. The metal mesh had a thickness of 0.71 mm before roll-based rolling and 0.3 mm after roll-based rolling, and the rolling ratio (= (thickness before rolling - thickness after rolling) / thickness before rolling × 100) was 57.7%. The surface aperture ratio after rolling was 4.8%.

Working Example 2

A plate-like rolled plate (metal support) was produced by rolling a twilled dutch weave metal mesh that was made of SUS, had a warp diameter of 0.27 mm and a weft diameter of 0.21 mm, and had a 24×250 mesh (warp × weft), through roll-based rolling. The metal mesh had a thickness of 0.71 mm before roll-based rolling and 0.35 mm after roll-based rolling, and the rolling ratio after rolling was 50.7%. The surface aperture ratio was 6.2%.

Working Example 3

A plate-like rolled plate (metal support) was produced by rolling a twilled dutch weave metal mesh that was made of SUS, had a warp diameter of 0.23 mm and a weft diameter of 0.15 mm, and had a 32×360 mesh (warp × weft), through roll-based rolling. The metal mesh had a thickness of 0.56 mm before roll-based rolling and 0.3 mm after roll-based rolling, and the rolling ratio was 46.4%. The surface aperture ratio after rolling was 37.1%.

Working Example 4

A plate-like rolled plate (metal support) was produced by rolling a twilled dutch weave metal mesh that was made of SUS, had a warp diameter of 0.19 mm and a weft diameter of 0.14 mm, and had a 40×400 mesh (warp × weft), through roll-based rolling. The metal mesh had a thickness of 0.48 mm before roll-based rolling and 0.3 mm after roll-based rolling, and the rolling ratio was 37.5%. The surface aperture ratio after rolling was 45.2%.

Working Example 5

A plate-like rolled plate (metal support) was produced by rolling an expanded metal that was made of SUS and had a mesh having a short-direction dimension SW of 1.5 mm and a longitudinal-direction dimension LW of 3.0 mm, through roll-based rolling. The expanded metal had a thickness of 0.99 mm before roll-based rolling and 0.31 mm after roll-based rolling, and the rolling ratio was 68.7%. The surface aperture ratio after rolling was 15.8%.

Working Example 6

A plate-like rolled plate (metal support) was produced by rolling an expanded metal that was made of SUS and had a mesh having a short-direction dimension SW of 1.3 mm and a longitudinal-direction dimension LW of 2.0 mm, through roll-based rolling. The expanded metal had a thickness of 0.56 mm before roll-based rolling and 0.29 mm after roll-based rolling, and the rolling ratio was 48.2%. The surface aperture ratio after rolling was 39.7%.

Working Example 7

A plate-like rolled plate (metal support) was produced by rolling a punched metal that was made of SUS and had a hole diameter of 0.4 mm and a hole pitch of 1.2 mm, through roll-based rolling. The punched metal had a thickness of 0.3 mm before roll-based rolling and 0.25 mm after roll-based rolling, and the rolling ratio was 16.7%. The surface aperture ratio after rolling was 8.5%.

Comparative Example 1

A plate-like rolled plate (metal support) was produced by rolling a plain dutch weave metal mesh that was made of SUS, had a warp diameter of 0.38 mm and a weft diameter of 0.26 mm, and had a 24×110 mesh (warp × weft), through roll-based rolling. The metal mesh had a thickness of 0.74 mm before roll-based rolling and 0.31 mm after roll-based rolling, and the rolling ratio was 58.1%. The surface aperture ratio after rolling was 59.8%.

Table 1

| Work. Ex. 1 | Metal mesh (twilled dutch weave) rolled plate | Surface aperture ratio: 4.8% |
|---|---|---|
| Work. Ex. 2 | Metal mesh (twilled dutch weave) rolled plate | Surface aperture ratio: 6.2% |
| Work. Ex. 3 | Metal mesh (twilled dutch weave) rolled plate | Surface aperture ratio: 37.1% |
| Work. Ex. 4 | Metal mesh (twilled dutch weave) rolled plate | Surface aperture ratio: 45.2% |
| Work. Ex. 5 | Expanded metal rolled plate | Surface aperture ratio: 15.8% |
| Work. Ex. 6 | Expanded metal rolled plate | Surface aperture ratio: 39.7% |
| Work. Ex. 7 | Punched metal rolled plate | Surface aperture ratio: 8.5% |
| Comp. Ex. 1 | Metal mesh (plain dutch weave) rolled plate | Surface aperture ratio: 59.8% |

Electrode Layer

As shown in FIG. 1, the electrode layer 2 can be provided as a thin layer in a region that is larger than the region provided with the metal plate penetration spaces 1c, on the front face of the metal support 1. When it is provided as a thin layer, the thickness can be set to approximately 1 $\mu$m to 100 $\mu$m, and preferably 5 pm to 50 pm, for example. This thickness makes it possible to ensure sufficient electrode performance while also achieving cost reduction by reducing the amount of expensive electrode layer material that is used. The region provided with the metal plate penetration spaces 1c is entirely covered by the electrode layer 2. That is, the metal plate penetration spaces 1c are formed inside the region of the metal support 1 in which the electrode layer 2 is formed. In other words, all the metal plate penetration spaces 1c are provided facing the electrode layer 2.

A composite material such as NiO-GDC, Ni-GDC, NiO-YSZ, Ni-YSZ, CuO-CeO$_2$, or Cu-CeO$_2$ can be used as the material for forming the electrode layer 2, for example. In these examples, GDC, YSZ, and CeO$_2$ can be called the aggregate of the composite material. It should be noted that it is preferable to form the electrode layer 2 using low-temperature calcining (not performing calcining treatment in a high temperature range of higher than 1100°C, but rather performing a wet process using calcining treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Due to these processes that can be used in a low temperature range, a favorable electrode layer 2 is obtained without using calcining in a high temperature range of higher than 1100°C, for example. Therefore, this is preferable due to being able to prevent damage to the metal support 1, suppress element interdiffusion between the metal support 1 and the electrode layer 2, and realize an electrochemical element that has excellent durability. Furthermore, using low-temperature calcining makes it possible to facilitate handling of raw materials and is thus more preferable.

The inside and the surface of the electrode layer 2 are provided with a plurality of pores in order to impart gas permeability to the electrode layer 2.

That is, the electrode layer 2 is formed as a porous layer. The electrode layer 2 is formed to have a denseness of 30% or more and less than 80%, for example. Regarding the size of the pores, a size suitable for smooth progress of an electrochemical reaction can be selected as appropriate. It should be noted that the "denseness" is a ratio of the material of the layer to the space and can be represented by a formula "1 - porosity", and is equivalent to relative density.

Intermediate Layer

As shown in FIG. 1, the intermediate layer 3 (intervening layer) can be formed as a thin layer on the electrode layer 2 so as to cover the electrode layer 2. When it is formed as a thin layer, the thickness can be set to approximately 1 $\mu$m to 100 pm, preferably approximately 2 pm to 50 pm, and more preferably approximately 4 pm to 25 pm, for example. This thickness makes it possible to ensure sufficient performance while also achieving cost reduction by reducing the amount of expensive intermediate layer material that is used. YSZ (yttria-stabilized zirconia), SSZ (scandia-stabilized zirconia), GDC (gadolinium-doped ceria), YDC (yttrium-doped ceria), SDC (samarium-doped ceria), or the like can be used as the material of the intermediate layer 3. In particular, ceria-based ceramics are favorably used.

It is preferable to form the intermediate layer 3 using low-temperature calcining (not performing calcining treatment in a high temperature range of higher than 1100°C, but rather performing a wet process using calcining treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Due to these film formation processes that can be used in a low temperature range, an intermediate layer 3 is obtained without using calcining in a high temperature range of higher than 1100°C, for example. Therefore, it is possible to prevent damage to the metal support 1, suppress element interdiffusion between the metal support 1 and the electrode layer 2, and realize an electrochemical element E that has excellent durability. Furthermore, using low-temperature calcining makes it possible to facilitate handling of raw materials and is thus more preferable.

It is preferable that the intermediate layer 3 has oxygen ion (oxide ion) conductivity. It is more preferable that the intermediate layer 3 has both oxygen ion (oxide ion) conductivity and electron conductivity, namely mixed conductivity. The intermediate layer 3 that has these properties is suitable for application to the electrochemical element E.

Electrolyte Layer

As shown in FIG. 1, the electrolyte layer 4 is formed as a thin layer on the intermediate layer 3 so as to cover the electrode layer 2 and the intermediate layer 3. The electrolyte layer 4 can also be formed as a thin film having a

thickness of 10 $\mu$m or less. Specifically, as shown in FIG. 1, the electrolyte layer 4 is provided on both the intermediate layer 3 and the metal support 1 (spanning the intermediate layer 3 and the metal support 1). Configuring the electrolyte layer 4 in this manner and joining the electrolyte layer 4 to the metal support 1 make it possible to allow the electrochemical element to have excellent toughness as a whole.

Also, as shown in FIG. 1, the electrolyte layer 4 is provided in a region that is larger than the region provided with the metal plate penetration spaces 1c, on the front face of the metal support 1. That is, the metal plate penetration spaces 1c are formed inside the region of the metal support 1 in which the electrolyte layer 4 is formed.

The leakage of gas from the electrode layer 2 and the intermediate layer 3 can be suppressed in the vicinity of the electrolyte layer 4. A description of this will be given. When the electrochemical element E is used as a constitutional element of a SOFC, gas is supplied from the back side of the metal support 1 through the metal plate penetration spaces 1c to the electrode layer 2 during the operation of the SOFC. In a region where the electrolyte layer 4 is in contact with the metal support 1, leakage of gas can be suppressed without providing another member such as a gasket. It should be noted that, although the entire vicinity of the electrode layer 2 is covered by the electrolyte layer 4 in this embodiment, a configuration in which the electrolyte layer 4 is provided on the electrode layer 2 and the intermediate layer 3 and a gasket or the like is provided in its vicinity may also be adopted.

Electrolyte materials having oxygen ion conductivity such as YSZ (yttria-stabilized zirconia), SSZ (scandia-stabilized zirconia), GDC (gadolinium-doped ceria), YDC (yttrium-doped ceria), SDC (samarium-doped ceria), LSGM (strontium- and magnesium-doped lanthanum gallate), and the like, and electrolyte materials having hydrogen ion conductivity such as perovskite oxides can be used as the material of the electrolyte layer 4. In particular, zirconia-based ceramics are favorably used. Using zirconia-based ceramics for the electrolyte layer 4 makes it possible to increase the operation temperature of the SOFC in which the electrochemical element E is used compared with the case where ceria-based ceramics and various materials having hydrogen ion conductivity are used. For example, when the electrochemical element E is used in the SOFC, by adopting a system configuration in which a material such as YSZ that can exhibit high electrolyte performance even in a high temperature range of approximately 650°C or higher is used as the material of the electrolyte layer 4, a hydrocarbon-based raw fuel material such as city gas or LPG is used as the raw fuel for the system, and the raw fuel material is reformed into anode gas of the SOFC through steam reforming or the like, it is thus possible to construct a high-efficiency SOFC system in which heat generated in a cell stack of the SOFC is used to reform raw fuel gas.

It is preferable to form the electrolyte layer 4 using low-temperature calcining (not performing calcining treatment in a high temperature range of higher than 1100°C, but rather performing a wet process using calcining treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Due to these film formation processes that can be used in a low temperature range, an electrolyte layer 4 that is dense and has high gas-tightness and gas barrier properties is obtained without using calcining in a high temperature range of higher than 1100°C, for example. Therefore, it is possible to prevent damage to the metal support 1, suppress element interdiffusion between the metal support 1 and the electrode layer 2, and realize an electrochemical element E that has excellent performance and durability. In particular, using low-temperature calcining, a spray coating technique, or the like makes it possible to realize a low-cost element and is thus preferable. Furthermore, using a spray coating technique makes it easy to obtain, in a low temperature range, an electrolyte layer that is dense and has high gas-tightness and gas barrier properties, and is thus more preferable.

The electrolyte layer 4 is given a dense configuration in order to block gas leakage of anode gas and cathode gas and exhibit high ion conductivity. The electrolyte layer 4 preferably has a denseness of 90% or more, more preferably 95% or more, and even more preferably 98% or more. When the electrolyte layer 4 is formed as a uniform layer, the denseness is preferably 95% or more, and more preferably 98% or more. When the electrolyte layer 4 has a multilayer configuration, at least a portion thereof preferably includes a layer (dense electrolyte layer) having a denseness of 98% or more, and more preferably a layer (dense electrolyte layer) having a denseness of 99% or more. The reason for this is that an electrolyte layer that is dense and has high gas-tightness and gas barrier properties can be easily formed due to such a dense electrolyte layer being included as a portion of the electrolyte layer even when the electrolyte layer has a multilayer configuration.

Reaction Preventing Layer

The reaction preventing layer 5 can be formed as a thin layer on the electrolyte layer 4. When it is formed as a thin layer, the thickness can be set to approximately 1 pm to 100 $\mu$m, preferably approximately 2 pm to 50 $\mu$m, and more preferably approximately 3 pm to 15 pm, for example. This thickness makes it possible to ensure sufficient performance while also achieving cost reduction by reducing the amount of expensive reaction preventing layer material that is used. The material of the reaction preventing layer 5 need only be capable of preventing reactions between the component of the electrolyte layer 4 and the component of the counter electrode layer 6. For example, a ceria-based material or the like is used. Materials that contain at least one element selected from the group consisting of Sm, Gd, and Y are favorably used as the material of the reaction preventing layer 5. It is preferable that at least one element selected from the group consisting of Sm, Gd, and Y is contained, and the total content of these elements is 1.0 mass% or more and 10 mass% or less. Introducing the reaction preventing layer 5 between the electrolyte layer 4 and the counter electrode layer 6 effectively suppresses reactions between the material constituting the counter electrode layer 6 and the material constituting the electrolyte layer 4 and makes it possible to improve long-term stability in the performance of the electrochemical element E. Forming the reaction preventing layer 5 using, as appropriate, a method through which the reaction preventing layer 5 can be formed at a treatment temperature of 1100°C or lower makes it possible to suppress damage to the metal support 1, suppress element interdiffusion between the metal support 1 and the electrode layer 2, and realize an electrochemical element E that has excellent performance and durability, and is thus preferable. For example, the reaction preventing layer 5 can be formed using, as appropriate, low-temperature calcining (not performing calcining treatment in a high temperature range of higher than 1100°C, but rather performing a wet process using calcining treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. In particular, using low-temperature calcining, a spray coating technique, or the like makes it possible to realize a low-cost element and is thus preferable. Furthermore, using low-temperature calcining makes it possible to facilitate handling of raw materials and is thus more preferable.

Counter Electrode Layer

The counter electrode layer 6 can be formed as a thin layer on the electrolyte layer 4 or the reaction preventing layer 5. When it is formed as a thin layer, the thickness can be set to approximately 1 pm to 100 pm, and preferably approximately 5 $\mu$m to 50 pm, for example. This thickness makes it possible to ensure sufficient electrode performance while also achieving cost reduction by reducing the amount of expensive counter electrode layer material that is used. A complex oxide such as LSCF or LSM, or a ceria-based oxide, or a mixture thereof can be used as the material of the counter electrode layer 6, for example. In particular, it is preferable that the counter electrode layer 6 includes a perovskite oxide containing two or more elements selected from the group consisting of La, Sr, Sm, Mn, Co, and Fe. The counter electrode layer 6 constituted by the above-mentioned material functions as a cathode.

It should be noted that forming the counter electrode layer 6 using, as appropriate, a method through which the counter electrode layer 6 can be formed at a treatment temperature of 1100°C or lower makes it possible to suppress damage to the metal support 1, suppress element interdiffusion between the metal support 1 and the electrode layer 2, and realize an electrochemical element E that has excellent performance and durability, and is thus preferable. For example, the counter electrode layer 6 can be formed using, as appropriate, low-temperature calcining (not performing calcining treatment in a high temperature range of higher than 1100°C, but rather performing a wet process using calcining treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. In particular, using low-temperature calcining, a spray coating technique, or the like makes it possible to realize a low-cost element and is thus preferable. Furthermore, using low-temperature calcining makes it possible to facilitate handling of raw materials and is thus more preferable.

Solid Oxide Fuel Cell

By configuring the electrochemical element E as described above, the electrochemical element E can be used as a power generating cell for a solid oxide fuel cell when the electrochemical element is allowed to function as a fuel cell (electrochemical power generating cell). For example, fuel gas containing hydrogen is allowed to flow from the back surface of the metal support 1 through the metal plate penetration spaces 1c to the electrode layer 2, air is allowed to flow to the counter electrode layer 6 serving as a counter electrode of the electrode layer 2, and the operation is performed at a temperature of 500°C or higher and 900°C or lower, for example. Accordingly, the oxygen $O_2$ included in air reacts with electrons $e^-$ in the counter electrode layer 6, thus producing oxygen ions $O^{2-}$. The oxygen ions $O^{2-}$ move through the electrolyte layer 4 to the electrode layer 2. In the electrode layer 2, the hydrogen $H_2$ included in the supplied fuel gas reacts with the oxygen ions $O^{2-}$, thus producing water $H_2O$ and electrons $e^-$.

When the electrolyte layer 4 is made of an electrolyte material having hydrogen ion conductivity, hydrogen $H_2$ included in the fuel gas flowing in the electrode layer 2 releases electrons $e^-$, thus producing hydrogen ions $H^+$. The hydrogen ions $H^+$ move to the counter electrode layer 6 through the electrolyte layer 4. In the counter electrode layer 6,

oxygen $O_2$ included in air, hydrogen ions $H^+$, and electrons $e^-$ react with each other to produce water $H_2O$.

With these reactions, electromotive force is generated between the electrode layer 2 and the counter electrode layer 6. In this case, the electrode layer 2 functions as a fuel electrode (anode) of the SOFC, and the counter electrode layer 6 functions as an air electrode (cathode).

Method for Manufacturing Electrochemical Element

Next, a method for manufacturing the electrochemical element E will be described.

Electrode Layer Forming Step

In an electrode layer forming step, the electrode layer 2 is formed as a thin film in a region that is broader than the region provided with the metal plate penetration spaces 1c, on the front face of the metal support 1. The through holes of the metal support 1 can be provided through laser processing or the like. As described above, the electrode layer 2 can be formed using low-temperature calcining (a wet process using calcining treatment in a low temperature range of 1100°C or lower), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Regardless of which technique is used, it is desirable to perform the technique at a temperature of 1100°C or lower in order to suppress deterioration of the metal support 1.

The following is a specific example of the case where low-temperature calcining is performed as the electrode layer forming step.

First, a material paste is produced by mixing powder of the material of the electrode layer 2 and a solvent (dispersion medium), and is applied to the front face of the metal support 1. Then, the electrode layer 2 is obtained through compression molding (electrode layer smoothing step) and calcining at a temperature of 1100°C or lower (electrode layer calcining step). Examples of compression molding of the electrode layer 2 include CIP (Cold Isostatic Pressing) molding, roll pressing molding, and RIP (Rubber Isostatic Pressing) molding. It is favorable to perform calcining of the electrode layer at a temperature of 800°C or higher and 1100°C or lower. The order in which the electrode layer smoothing step and the electrode layer calcining step are performed can be changed.

It should be noted that, when an electrochemical element including an intermediate layer 3 is formed, the electrode layer smoothing step and the electrode layer calcining step may be omitted, and an intermediate layer smoothing step and an intermediate layer calcining step, which will be described later, may include the electrode layer smoothing step and the electrode layer calcining step.

It should be noted that lapping molding, leveling treatment, surface cutting treatment, surface polishing treatment, or the like can also be performed as the electrode layer smoothing step.

Diffusion Suppressing Layer Forming Step

The metal oxide layer 1f (diffusion suppressing layer) is formed on the surface of the metal support 1 during the calcining step in the above-described electrode layer forming step. It should be noted that it is preferable that the above-mentioned calcining step includes a calcining step in which the calcining atmosphere satisfies the atmospheric condition that the oxygen partial pressure is low because a high-quality metal oxide layer 1f (diffusion suppressing layer) that has a high element interdiffusion suppressing effect and has a low resistance value is formed. In a case where a coating method that does not include calcining is performed as the electrode layer forming step, a separate diffusion suppressing layer forming step may also be included. In any case, it is desirable to perform these steps at a temperature of 1100°C or lower such that damage to the metal support 1 can be suppressed. The metal oxide layer 1f (diffusion suppressing layer) may be formed on the surface of the metal support 1 during the calcining step in an intermediate layer forming step, which will be described later.

Intermediate Layer Forming Step

In an intermediate layer forming step, the intermediate layer 3 is formed as a thin layer on the electrode layer 2 so as to cover the electrode layer 2. As described above, the intermediate layer 3 can be formed using low-temperature calcining (a wet process using calcining treatment in a low temperature range of 1100°C or lower), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Regardless of which technique is used, it is desirable to perform the technique at a temperature of 1100°C or lower in order to suppress deterioration of the metal support 1.

The following is a specific example of the case where low-temperature calcining is performed as the intermediate layer forming step.

First, a material paste is produced by mixing powder of the material of the intermediate layer 3 and a solvent (dispersion medium), and is applied to the front face of the metal support 1. Then, the intermediate layer 3 is obtained through compression molding (intermediate layer smoothing step) and calcining at a temperature of 1100°C or lower (intermediate layer calcining step). Examples of rolling of the intermediate layer 3 include CIP (Cold Isostatic Pressing) molding, roll pressing molding, and RIP (Rubber Isostatic Pressing) molding. It is favorable to perform calcining of the intermediate layer 3 at a temperature of 800°C or higher and 1100°C or lower. The reason for this is that this temperature makes it possible to form an intermediate layer 3 that has high strength while suppressing damage to and deterioration of the metal support 1. It is more preferable to perform calcining of the intermediate layer 3 at a temperature of 1050°C or lower, and more preferably 1000°C or lower. The reason for this is that the lower the calcining temperature of the intermediate layer 3 is, the more likely it is to further suppress damage to and deterioration of the metal support 1 when forming the electrochemical element E. The order in which the intermediate layer smoothing step and the intermediate layer calcining step are performed can be changed.

It should be noted that lapping molding, leveling treatment, surface cutting treatment, surface polishing treatment, or the like can also be performed as the intermediate layer smoothing step.

Electrolyte Layer Forming Step

In an electrolyte layer forming step, the electrolyte layer 4 is formed as a thin layer on the intermediate layer 3 so as to cover the electrode layer 2 and the intermediate layer 3. The electrolyte layer 4 may also be formed as a thin film having a thickness of 10 pm or less. As described above, the electrolyte layer 4 can be formed using low-temperature calcining (a wet process using calcining treatment in a low temperature range of 1100°C or lower), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Regardless of which technique is used, it is desirable to perform the technique at a temperature of 1100°C or lower in order to suppress deterioration of the metal support 1.

It is desirable to perform a spray coating technique as the electrolyte layer forming step in order to form a high-quality electrolyte layer 4 that is dense and has high gas-tightness and gas barrier properties in a temperature range of 1100°C or lower. In this case, the material of the electrolyte layer 4 is sprayed onto the intermediate layer 3 on the metal support 1, and the electrolyte layer 4 is thus formed.

Reaction Preventing Layer Forming Step

In a reaction preventing layer forming step, the reaction preventing layer 5 is formed as a thin layer on the electrolyte layer 4. As described above, the reaction preventing layer 5 can be formed using low-temperature calcining (a wet process using calcining treatment in a low temperature range of 1100°C or lower), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Regardless of which technique is used, it is desirable to perform the technique at a temperature of 1100°C or lower in order to suppress deterioration of the metal support 1. It should be noted that leveling treatment, surface cutting treatment, or surface polishing treatment may be performed after the formation of the reaction preventing layer 5, or pressing processing may be performed after wet formation and before calcining in order to flatten the top face of the reaction preventing layer 5.

Counter Electrode Layer Forming Step

In a counter electrode layer forming step, the counter electrode layer 6 is formed as a thin layer on the reaction preventing layer 5. As described above, the counter electrode layer 6 can be formed using low-temperature calcining (a wet process using calcining treatment in a low temperature range of 1100°C or lower), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Regardless of which technique is used, it is desirable to perform the technique at a temperature of 1100°C or lower in order to suppress deterioration of the metal support 1.

In this manner, the electrochemical element E can be manufactured.

It should be noted that a configuration is also possible in which the electrochemical element E does not include both or either of the intermediate layer 3 (intervening layer) and the reaction preventing layer 5. That is, a configuration is also possible in which the electrode layer 2 and the electrolyte layer 4 are in contact with each other, or a configuration is also possible in which the electrolyte layer 4 and the counter electrode layer 6 are in contact with each other. In this case, in the above-described manufacturing method, the intermediate layer forming step and the reaction preventing layer forming step are omitted. It should be noted that it is also possible to add a step of forming another layer or to form a plurality of layers of the same type one on top of another, but in any case, it is desirable to perform these steps at a temperature of 1100°C or lower.

Second Embodiment

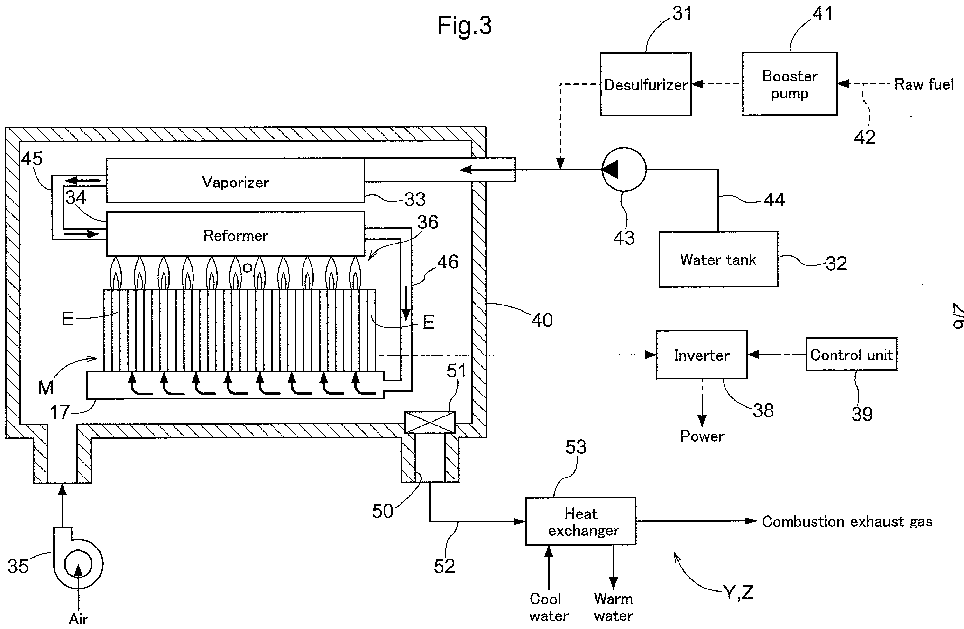

An electrochemical element E, an electrochemical module M, an electrochemical device Y, and an energy system Z according to a second embodiment will be described with reference to FIGS. 2 and 3.
As shown in FIG. 2, in the electrochemical element E according to the second embodiment, a U-shaped member 7 is attached to the back face of the metal support 1, and the metal support 1 and the U-shaped member 7 form a tubular support.
The electrochemical module M is configured by stacking (assembling) a plurality of electrochemical elements E with collector members 26 being sandwiched therebetween. Each of the collector members 26 is joined to the counter electrode layer 6 of the electrochemical element E and the U-shaped member 7, and electrically connects them. It should be noted that a configuration may also be employed in which the collector members 26 are omitted, and the counter electrode layers 6 of the electrochemical elements E are electrically connected directly to the U-shaped members 7.
The electrochemical module M includes a gas manifold 17, the collector members 26, a terminal member, and a current extracting unit. One open end of each tubular support in the stack of the plurality of electrochemical elements E is connected to the gas manifold 17, and gas is supplied from the gas manifold 17 to the electrochemical elements E. The supplied gas flows inside the tubular supports, and is supplied to the electrode layers 2 through the metal plate penetration spaces 1c of the metal supports 1.
FIG. 3 shows an overview of the energy system Z and the electrochemical device Y
The energy system Z includes the electrochemical device Y, and a heat exchanger 53 serving as a waste heat utilization system that reuses heat discharged from the electrochemical device Y.
The electrochemical device Y includes the electrochemical module M, and a fuel converter including a desulfurizer 31 and a reformer 34, and includes a fuel supply unit that supplies fuel gas containing a reducing component to the electrochemical module M, and an inverter 38 (an example of a power converter) that extracts power from the electrochemical module M.
Specifically, the electrochemical device Y includes the desulfurizer 31, a water tank 32, a vaporizer 33, the reformer 34, a blower 35, a combustion unit 36, the inverter 38, a control unit 39, a storage container 40, and the electrochemical module M.
The desulfurizer 31 removes sulfur compound components contained in a hydrocarbon-based raw fuel such as city gas (i.e., performs desulfurization). When a sulfur compound is contained in the raw fuel, the inclusion of the desulfurizer 31 makes it possible to suppress the influence that the sulfur compound has on the reformer 34 or the electrochemical elements E. The vaporizer 33 produces water vapor (steam) from water supplied from the water tank 32. The reformer 34 uses the water vapor (steam) produced by the vaporizer 33 to perform steam reforming of the raw fuel desulfurized by the desulfurizer 31, thus producing reformed gas containing hydrogen.
The electrochemical module M generates power by causing an electrochemical reaction to occur with use of the reformed gas supplied from the reformer 34 and air supplied from the blower 35. The combustion unit 36 mixes the reaction exhaust gas discharged from the electrochemical module M with air, and burns combustible components in the reaction exhaust gas.
The electrochemical module M includes a plurality of electrochemical elements E and the gas manifold 17. The electrochemical elements E are arranged side-by-side and electrically connected to each other, and one end portion (lower end portion) of each of the electrochemical elements E is fixed to the gas manifold 17. The electrochemical elements E generate power by causing an electrochemical reaction to occur between the reformed gas supplied via the gas manifold 17 and air supplied from the blower 35.
The inverter 38 adjusts the power output from the electrochemical module M to obtain the same voltage and frequency as electrical power received from a commercial system (not shown). The control unit 39 controls the operation of the electrochemical device Y and the energy system Z.
The vaporizer 33, the reformer 34, the electrochemical module M, and the combustion unit 36 are stored in the storage container 40. The reformer 34 performs reforming process on the raw fuel with use of combustion heat produced by the combustion of reaction exhaust gas in the combustion unit 36.
The raw fuel is supplied to the desulfurizer 31 via a raw fuel supply passage 42, due to the operation of a booster pump 41. The water in the water tank 32 is supplied to the vaporizer 33 via a water supply passage 44, due to the operation of a water pump 43. The raw fuel supply passage 42 merges with the water supply passage 44 at a location on the downstream side of the desulfurizer 31, and the water and the raw fuel, which have been merged outside of the storage container 40, are supplied to the vaporizer 33 provided in the storage container 40.

The water is vaporized by the vaporizer 33 to produce water vapor. The raw fuel, which contains the water vapor produced by the vaporizer 33, is supplied to the reformer 34 via a water vapor-containing raw fuel supply passage 45. In the reformer 34, the raw fuel is subjected to steam reforming, thus producing reformed gas that includes hydrogen gas as a main component (first gas including a reducing component). The reformed gas produced in the reformer 34 is supplied to the gas manifold 17 of the electrochemical module M via a reformed gas supply passage 46.

The reformed gas supplied to the gas manifold 17 is distributed among the electrochemical elements E, and is supplied to the electrochemical elements E from the lower ends, which are the connection portions where the electrochemical elements E and the gas manifold 17 are connected to each other. Mainly the hydrogen (reducing component) in the reformed gas is used in the electrochemical reaction in the electrochemical elements E. The reaction exhaust gas, which contains remaining hydrogen gas not used in the reaction, is discharged from the upper ends of the electrochemical elements E to the combustion unit 36.

The reaction exhaust gas is burned in the combustion unit 36, and combustion exhaust gas is discharged from a combustion exhaust gas outlet 50 to the outside of the storage container 40. A combustion catalyst unit 51 (e.g., a platinum-based catalyst) is provided in the combustion exhaust gas outlet 50, and reducing components such as carbon monoxide and hydrogen contained in the combustion exhaust gas are removed by combustion. The combustion exhaust gas discharged from the combustion exhaust gas outlet 50 is sent to the heat exchanger 53 via a combustion exhaust gas discharge passage 52.

The heat exchanger 53 uses supplied cool water to perform heat exchange on the combustion exhaust gas produced by combustion in the combustion unit 36, thus producing warm water. In other words, the heat exchanger 53 operates as a waste heat utilization system that reuses heat discharged from the electrochemical device Y.

It should be noted that instead of the waste heat utilization system, it is possible to provide a reaction exhaust gas using unit that uses the reaction exhaust gas that is discharged from (not burned in) the electrochemical module M. The reaction exhaust gas contains remaining hydrogen gas that was not used in the reaction in the electrochemical elements E. In the reaction exhaust gas using unit, the remaining hydrogen gas is used to perform heat utilization through combustion or power generation by a fuel cell and so on, thus achieving effective energy utilization.

Third Embodiment

FIG. 4 shows another embodiment of the electrochemical module M. The electrochemical module M according to a third embodiment is configured by stacking the above-described electrochemical elements E with cell connecting members 71 being sandwiched therebetween.

Each of the cell connecting members 71 is a plate-like member that has electrical conductivity and does not have gas permeability, and the upper face and the lower face are respectively provided with grooves 72 that are orthogonal to each other. The cell connecting members 71 can be formed using a metal such as stainless steel or a metal oxide.

As shown in FIG. 4, when the electrochemical elements E are stacked with the cell connecting members 71 being sandwiched therebetween, a gas can be supplied to the electrochemical elements E through the grooves 72. Specifically, the grooves 72 on one side are first gas passages 72a and supply gas to the front side of one electrochemical element E, that is to say, the counter electrode layer 6. The grooves 72 on the other side are second gas passages 72b and supply gas from the back side of one electrochemical element E, that is, the back face of the metal support 1, through the metal plate penetration spaces 1c to the electrode layers 2.

In the case of operating this electrochemical module M as a fuel cell, oxygen is supplied to the first gas passages 72a, and hydrogen is supplied to the second gas passages 72b. Accordingly, a fuel cell reaction progresses in the electrochemical elements E, and electromotive force and electrical current are generated. The generated power is extracted to the outside of the electrochemical module M from the cell connecting members 71 at the two ends of the stack of electrochemical elements E.

It should be noted that although the grooves 72 that are orthogonal to each other are respectively formed on the front face and the back face of each of the cell connecting members 71 in Third Embodiment, grooves 72 that are parallel to each other can be respectively formed on the front face and the back face of each of the cell connecting members 71.

Other Embodiments

(1) Although the electrochemical elements E are used in a solid oxide fuel cell in the embodiments described above, the electrochemical elements E can also be used in a solid oxide electrolytic (electrolysis) cell, an oxygen sensor using a solid oxide, and the like.

That is, in the embodiments described above, a configuration that can improve the efficiency of converting chemical energy such as fuel into electric energy is described.

In other words, in the embodiments described above, the electrochemical elements E and the electrochemical module M are operated as fuel cells, and hydrogen gas flows to the electrode layer 2 and oxygen gas flows to the counter electrode layer 6. Accordingly, oxygen molecules $O_2$ react with electrons $e^-$ to produce oxygen ions $O^{2-}$ in the counter electrode layer 6. The oxygen ions $O^{2-}$ move to the electrode layer 2 through the electrolyte layer 4. In the electrode layer 2, hydrogen molecules $H_2$ react with oxygen ions $O^{2-}$ to produce water $H_2O$ and electrons $e^-$. With these reactions, electromotive force is generated between the electrode layer 2 and the counter electrode layer 6, and power is generated.

On the other hand, when the electrochemical elements E and the electrochemical module M are operated as electrolytic cells, gas containing water vapor and carbon dioxide flows to the electrode layer 2, and a voltage is applied between the electrode layer 2 and the counter electrode layer 6. As a result, in the electrode layer 2, electrons $e^-$ react with water molecules $H_2O$ and carbon dioxide molecules $CO_2$ to produce hydrogen molecules $H_2$, and carbon monoxide CO and oxygen ions $O^{2-}$. The oxygen ions $O^{2-}$ move to the counter electrode layer 6 through the electrolyte layer 4. In the counter electrode layer 6, the oxygen ions $O^{2-}$ release electrons and oxygen molecules $O_2$ are produced. Through the reactions above, water molecules $H_2O$ are electrolyzed into hydrogen molecules $H_2$ and oxygen molecules $O_2$, and in the case where gas containing carbon dioxide molecules $CO_2$ flows, carbon dioxide molecules $CO_2$ are electrolyzed into carbon monoxide molecules CO and oxygen $O_2$.

In the case where gas containing water vapor and carbon dioxide molecules $CO_2$ flows, a fuel converter 91 that synthesizes various compounds such as hydrocarbons from hydrogen, carbon monoxide, and the like generated through the above-mentioned electrolysis in the electrochemical elements E and the electrochemical module M can be provided. With the fuel supply unit (not shown), hydrocarbon and the like produced by this fuel converter 91 can flow to the electrochemical elements E and the electrochemical module M or can be extracted from the system and the device and separately used as fuel or a chemical raw material.

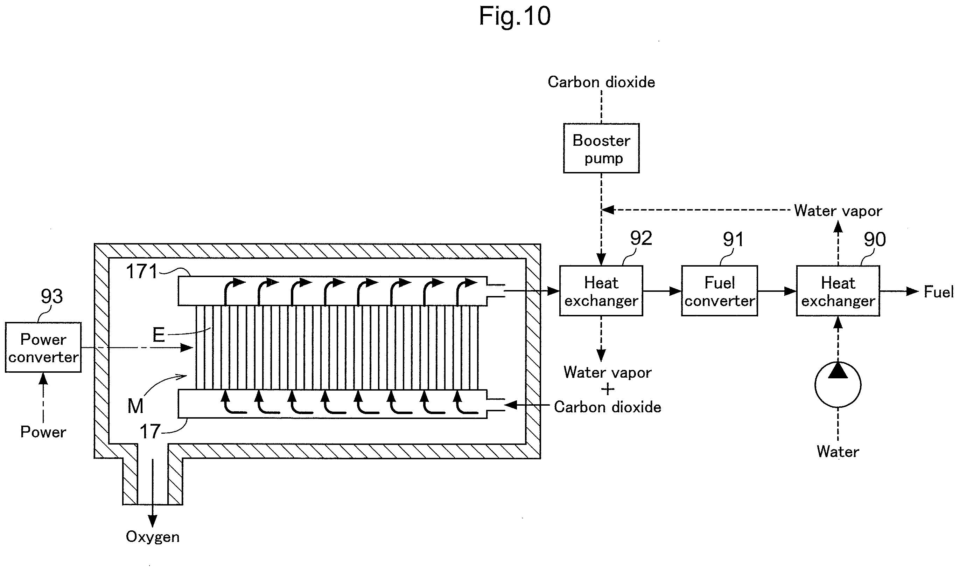

In an energy system shown in FIG. 10, the electrochemical module M includes a plurality of electrochemical elements E, a gas manifold 17, and a gas manifold 171. The electrochemical elements E are arranged side-by-side and electrically connected to each other. One end portion (lower end portion) of each of the electrochemical elements E is fixed to the gas manifold 17, and the other end portion (upper end portion) thereof is fixed to the gas manifold 171. Water vapor and carbon dioxide are supplied to the gas manifold 17, which is located on the one end (lower end) side of each of the electrochemical elements E. Hydrogen, carbon monoxide, and the like generated through the above-described reactions in the electrochemical elements E of the electrochemical element E are collected by the manifold 171 that is in communication with the other end portion (upper end portion) of each of the electrochemical elements E.

By employing the configuration in which the heat exchanger 90 shown in FIG. 10 is operated as a waste heat utilization system that performs heat exchange between the water and the reaction heat produced by the reaction in the fuel converter 91 to vaporize the water, and the heat exchanger 92 shown in FIG. 10 is operated as a waste heat utilization system that performs heat exchange between water vapor and carbon dioxide, and waste heat produced by the electrochemical elements E to preheat the water vapor and the carbon dioxide, the energy efficiency can be improved.

Moreover, a power converter 93 supplies power to the electrochemical elements E. Accordingly, as mentioned above, the electrochemical elements E function as electrolytic cells.

Therefore, with the above-mentioned configuration, an electrochemical elements E and the like that can improve the efficiency of converting electric energy into chemical energy such as fuel can be provided.

(2) In the embodiments described above, a composite material such as NiO-GDC, Ni-GDC, NiO-YSZ, Ni-YSZ, CuO-CeO$_2$, or Cu-CeO$_2$ is used as the material of the electrode layer 2, and a complex oxide such as LSCF or LSM is used as the material of the counter electrode layer 6. With this configuration, the electrode layer 2 serves as a fuel electrode (anode) when hydrogen gas is supplied thereto, and the counter electrode layer 6 serves as an air electrode (cathode) when air is supplied thereto, thus making it possible to use the electrochemical element E as a cell for a solid oxide fuel cell. It is also possible to change this configuration and thus configure an electrochemical element E such that the electrode layer 2 can be used as an air electrode and the counter electrode layer 6 can be used as a fuel electrode. That is, a complex oxide such as LSCF or LSM is used as the material of the electrode layer 2, and a composite material such as NiO-GDC, Ni-GDC, NiO-YSZ, Ni-YSZ, CuO-CeO$_2$, or Cu-CeO$_2$ is used as the material of the counter electrode layer 6. With this configuration, the electrode layer 2 serves as an air electrode when air is supplied thereto, and the counter electrode layer 6 serves as a fuel electrode when hydrogen gas is supplied thereto, thus making it possible to use the electrochemical element E as a cell for a solid oxide fuel cell.

(3) Although the electrochemical element E is mainly used in a solid oxide fuel cell having a flat-plate shape or a cylindrical flat-plate shape in the embodiments described above, the electrochemical element E can also be applied to electrochemical elements for a solid oxide fuel cell having a cylindrical shape.

(4) Although the metal support 1 (metal plate) is used as a support for the electrochemical element E in the embodiments described above, the metal plates of these embodiments can also be used as a support for various materials such as a ceramic layer (an example of objects to be supported) and used in various devices other than an electrochemical element.

(5) In the embodiments described above, the electrochemical device Y includes the electrochemical module M including a plurality of electrochemical elements E. However, the electrochemical device Y of the embodiments described above can also be applied to a configuration in which one electrochemical element E is provided.

(6) Although the electrochemical element E has a configuration in which the U-shaped member 7 is attached to the back face of the metal support 1, and two members, namely the metal support 1 and the U-shaped member 7, form a tubular support, a configuration may also be employed in which a tubular support is constituted by a metal support 1 and a U-shaped member 7 formed in one piece using a single member, or in which a tubular support is constituted by three or more members.

Moreover, a configuration may also be employed in which the U-shaped member 7 is omitted and the metal support 1 supports the electrode layer 2 and the like.

It should be noted that the configurations disclosed in the above-described embodiments can be used in combination with configurations disclosed in other embodiments as long as they are compatible with each other. The embodiments disclosed in this specification are illustrative, and embodiments of the present invention are not limited thereto and can be modified as appropriate without departing from the object of the present invention.

Industrial Applicability

The present invention can be applied to a metal plate, and a metal-supported electrochemical element and a cell for a solid oxide fuel cell that include the metal plate.

Description of Reference Signs

1: Metal support (metal plate)
1a: Front face
1b: Back face
1c: Hole (metal plate penetration space)
1d: Front-side opening (surface opening)
1e: Back-side opening (surface opening)
1f: Metal oxide layer
1g: Hole region
1h: Unit region
2: Electrode layer
3: Intermediate layer
4: Electrolyte layer
5: Reaction preventing layer
6: Counter electrode layer
7: U-shaped member
10: Material plate
10c: Hole (penetration space)
20: Rolled plate (metal support)
20c: Hole (metal plate penetration space)
A: Aperture ratio
E: Electrochemical element
M: Electrochemical module
Y: Electrochemical device
Z: Energy system

**Claims**

1. A method for manufacturing a metal plate, comprising
a rolling step for rolling a metal material provided with a penetration space passing through the metal material in a thickness direction to reduce a thickness of the metal material and reduce an area of a surface opening formed in a surface of the metal material by the penetration space, thereby producing a plate-like metal plate.

2. The method for manufacturing a metal plate according to claim 1, wherein an aperture ratio of a surface opening formed in a surface of the metal plate by a metal plate penetration space is set to 50% or less by performing the rolling step.

3. The method for manufacturing a metal plate according to claim 1 or 2, wherein one of a metal mesh, an expanded metal, and a punched metal is used as the metal material.

4. A metal plate having a plate shape as a whole,
the metal plate being provided with a metal plate penetration space passing through the metal plate in a thickness direction,
wherein an aperture ratio of a surface opening formed in a surface of the metal plate by the metal plate penetration space is 50% or less.

5. The metal plate according to claim 4, which has a thickness of 0.1 mm or more and 1.0 mm or less.

6. The metal plate according to claim 4 or 5, which is made of a Fe-Cr based alloy.

7. The metal plate according to any one of claims 4 to 6, wherein at least a portion of a surface of the metal plate is covered by a metal oxide film.

8. An electrochemical element in which at least an electrode layer, an electrolyte layer, and a counter electrode layer are provided on/over the metal plate according to any one of claims 4 to 7.

9. An electrochemical module in which a plurality of the electrochemical elements according to claim 8 are arranged in an assembled state.

10. An electrochemical device comprising at least the electrochemical element according to claim 8 or the electrochemical module according to claim 9 and a fuel converter, and comprising a fuel supply unit that allows gas containing a reducing component to flow between the electrochemical element or the electrochemical module and the fuel converter.

11. An electrochemical device comprising at least the electrochemical element according to claim 8 or the electrochemical module according to claim 9 and a power converter that extracts power from the electrochemical element or the electrochemical module or supplies power to the electrochemical element or the electrochemical module.

12. An energy system comprising:

the electrochemical device according to claim 10 or 11; and
waste heat utilization system that reuses heat discharged from the electrochemical device.

13. A solid oxide fuel cell comprising the electrochemical element according to claim 8, wherein a power generation reaction is caused in the electrochemical element.

14. A solid oxide electrolytic cell comprising the electrochemical element according to claim 8, wherein an electrolytic reaction is caused in the electrochemical element.

## Fig.1

E

6

5

1d

1a

4

3

2

1b

1c

1e

1c

1f

1

## Fig.2

7

1

17

E

26

M

## Fig.3

Fig.4

M

71

72b
72a } 72

E

71

72b
72a } 72

E

71

72b
72a } 72

E

71

Fig.5

D

1a

1d

1d

T

1

1b   1e      1c         1e      1c

1

P

P

1h

1c

1c

1g

1c

Fig.6

Fig.7

# Fig.8

# Fig.9

# Fig.10

Carbon dioxide

Booster pump

Water vapor

93 Power converter

Power

171

E

M

17

Oxygen

92 Heat exchanger

Water vapor + Carbon dioxide

91 Fuel converter

90 Heat exchanger

Fuel

Water

## INTERNATIONAL SEARCH REPORT

International application No.

PCT/JP2019/014379

### A. CLASSIFICATION OF SUBJECT MATTER
Int.Cl.   H01M8/1226(2016.01)i, B21B1/22(2006.01)i, H01M8/00(2016.01)i,
          H01M8/0258(2016.01)i, H01M8/12(2016.01)i, H01M8/1286(2016.01)i,
          H01M8/2484(2016.01)i

According to International Patent Classification (IPC) or to both national classification and IPC

### B. FIELDS SEARCHED

Minimum documentation searched (classification system followed by classification symbols)
Int.Cl.   H01M8/1226, B21B1/22, H01M8/00, H01M8/0258, H01M8/12,
          H01M8/1286, H01M8/2484

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2017-148705 A (MOLITEC STEEL CO., LTD.) 31 August 2017, claims, paragraphs [0016], [0024], [0035], fig. 3 (Family: none) | 1-6<br>7<br>8-14 |
| Y | JP 2002-104810 A (NIPPON YAKIN KOGYO CO., LTD.) 10 April 2002, paragraphs [0004], [0005] (Family: none) | 7 |

☒  Further documents are listed in the continuation of Box C.    ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 May 2019 (31.05.2019) | 11 June 2019 (11.06.2019) |

| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |
|---|---|

Form PCT/ISA/210 (second sheet) (January 2015)

**INTERNATIONAL SEARCH REPORT**

| International application No. |
| --- |
| PCT/JP2019/014379 |

C (Continuation).  DOCUMENTS CONSIDERED TO BE RELEVANT

| Category* | Citation of document, with indication, where appropriate, of the relevant passages | Relevant to claim No. |
| --- | --- | --- |
| X<br>A | JP 11-067219 A (NIPPON FOIL MFG CO., LTD.) 09 March 1999, claims, paragraphs [0013], [0016], example 2 & US 7191502 B1, claims, column 4, lines 10-31, column 5, lines 4-11, example 2 | 1-5, 8-9, 11<br>6-7, 10, 12-14 |
| X<br>Y<br>A | JP 2017-059504 A (OSAKA GAS CO., LTD.) 23 March 2017, claims, paragraphs [0043]-[0047], [0067], [0071], fig. 1 & US 2018/0269489 A1, claims, paragraphs [0053]-[0059], [0085]-[0086], [0093]-[0094], fig. 1 & EP 3352274 A1 & CN 108028410 A & KR 10-2018-0069821 A | 4-10, 13<br>7, 11-12, 14<br>1-3 |
| X<br>Y<br>A | JP 2016-195029 A (OSAKA GAS CO., LTD.) 17 November 2016, claims, paragraphs [0056]-[0068], [0083]-[0090], [0127], fig. 1, 2 (Family: none) | 4-6, 8-14<br>7, 11-12, 14<br>1-3 |
| A | JP 2006-116671 A (KOBE STEEL, LTD.) 11 May 2006, entire text (Family: none) | 1-14 |
| A | JP 60-133936 A (MATSUSHITA ELECTRIC WORKS, LTD.) 17 July 1985, entire text (Family: none) | 1-14 |
| A | JP 2015-099772 A (ASAHI GLASS CO., LTD.) 28 May 2015, entire text (Family: none) | 1-14 |

Form PCT/ISA/210 (continuation of second sheet) (January 2015)

**INTERNATIONAL SEARCH REPORT**

International application No.

PCT/JP2019/014379

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
(Invention 1) Claims 1-3
        Claims 1-3 lack novelty in light of document 1 (JP 2017-148705 A), and thus do not have a special technical feature.

(Invention 2) Claims 4-14
        Claim 4 is an invention pertaining to a metal plate having a through-space and not specified by a manufacturing method of claims 1-3, and cannot be recognized as having a technical feature identical or corresponding to that of claims 1-3.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**       ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008525967 A